## Europäisches Patentamt
## European Patent Office
## Office européen des brevets

(11) Veröffentlichungsnummer: **0 172 457**
**B1**

(12) # EUROPÄISCHE PATENTSCHRIFT

(45) Veröffentlichungstag der Patentschrift:
21.09.88

(51) Int. Cl.⁴: **F 16 D 27/10,** F 16 D 13/02,
F 16 D 67/02

(21) Anmeldenummer: **85109539.8**

(22) Anmeldetag: **29.07.85**

(54) **Schlingfeder-Kupplung.**

(30) Priorität: **16.08.84 CH 3939/84**

(43) Veröffentlichungstag der Anmeldung:
**26.02.86 Patentblatt 86/9**

(45) Bekanntmachung des Hinweises auf die Patenterteilung:
**21.09.88 Patentblatt 88/38**

(84) Benannte Vertragsstaaten:
**CH DE FR GB IT LI NL**

(56) Entgegenhaltungen:
**CH-A-619 758**
**DE-A-1 816 294**
**DE-B-2 640 744**
**FR-A-2 109 349**
**US-A-1 819 306**
**US-A-3 393 779**
**US-A-3 394 785**
**US-A-3 521 730**
**US-A-3 877 554**

(73) Patentinhaber: **Baumann & Cie. AG, Ferrachstrasse 31, CH- 8630 Rüti (CH)**

(72) Erfinder: **Rüegg, Hans R., Berghofweg 11, CH- 8630 Rüti (CH)**
Erfinder: **Iten, Peter, Im Chramen 9, CH- 8712 Stäfa (CH)**

(74) Vertreter: **Scheidegger, Zwicky, Werner & Co., Stampfenbachstrasse 48 Postfach, CH- 8023 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schlingfeder-Kupplung mit einer Antriebsnabe und einer Abtriebsnabe und einer koaxial zur Antriebsnabe und zur Abtriebsnabe in zur Drehmomentübertragung geeigneten Weise angeordneten Schlingfeder sowie mit einer Schalthülse, an welcher ein Federende der Schlingfeder festgehalten ist, deren anderes Federende an der Abtriebsnabe festgehalten ist und welche Schalthülse einen Nocken zum Zusammenwirken mit einem durch einen Stellantrieb gesteuerten Auslösehebel zwecks Ein- und Ausschalten der Kupplung aufweist. Eine Kupplung dieser Art ist beispielsweise aus der CH-A-619 758 und der US-A-3 394 785 bekannt.

Die bekannten Schlingfeder-Kupplungen dieser Art, die beispielsweise als Schaltkupplungen für die Antriebsübertragung von häufig zu betätigenden Steuergliedern verwendet werden, besitzen in den meisten Fällen eine Hohlwelle, um die Kupplung auf eine vorhandene Antriebs- oder Abtriebswelle aufzustecken. Diese Welle muss dann jedoch ausserhalb der Schlingfeder-Kupplung gelagert sein, beispielsweise an einer Maschine, da die Kupplung selbst die Lagerungsfunktion nicht übernehmen kann.

Die der Erfindung zugrunde liegende Aufgabe bestand daher darin, eine Schlingfeder-Kupplung der eingangs genannten Art derart auszubilden, dass sie an einen Motor oder ein Getriebe direkt angeflanscht werden kann, ohne dass ausserhalb der Kupplung noch eine separate Lagerung vorgesehen werden muss. Ausserdem soll die beispielsweise aus einem Hubmagneten bestehende Betätigungsvorrichtung für die Schlingfeder-Kupplung mit dieser selbst zu einer Baueinheit zusammengefasst sein, um diese Baueinheit anflanschen zu können.

Zur Lösung dieser Aufgabe weist die Schlingfeder-Kupplung die Merkmale gemäss Anspruch 1 auf. Bevorzugte Ausführungsformen weisen die in den abhängigen Ansprüchen aufgeführten Merkmale auf.

Schlingfeder-Kupplungen der eingangs genannten Art besitzen generell den Vorteil, dass sie im Vergleich zu bekannten, beispielsweise als elektromagnetische Einscheiben- oder Lamellen-Kupplungen gebauten Schaltkupplungen bei einem gleichen Drehmoment kleinere geometrische Abmessungen aufweisen, einfacher im Aufbau sind und aufgrund der ein- oder mehrfach vorhandenen Schaltnocken eine sehr präzise Schaltgenauigkeit gewährleisten. Es ergeben sich daher weitere Vorteile, wenn für Schlingfeder-Kupplungen dieser Art nicht noch eine separate Lagerung vorgesehen werden muss.

Ein Ausführungsbeispiel der Erfindung wird nachfolgend anhand der Zeichnungen näher beschrieben. Es zeigen:

Fig. 1 einen Axialschnitt durch eine Schlingfeder-Kupplung gemäss der Linie I-I in Fig. 2;

Fig. 2 einen Querschnitt gemäss der Linie II-II in Fig. 1.

Die Schlingfeder-Kupplung weist eine Antriebsnabe 1 auf, die in einem im wesentlichen zylindrischen Gehäuse 2 mittels zweier im axialen Abstand voneinander angeordneter Wälzlager 3 und 4 gelagert ist. Das Gehäuse 2 weist am Ende einen Flansch 5 auf, mit dem die Kupplung an einen in der Zeichnung nicht dargestellten Motor oder an ein Getriebe angeflanscht werden kann. Am gegenüberliegenden Ende ist das Gehäuse 2 ohne Flansch dargestellt, kann aber wahlweise auch mit einem strichpunktiert dargestellten Flansch versehen sein. Ferner kann ein Gehäuse ohne Flansche mit Füssen versehen sein, die Bohrungen für Befestigungsschrauben aufweisen.

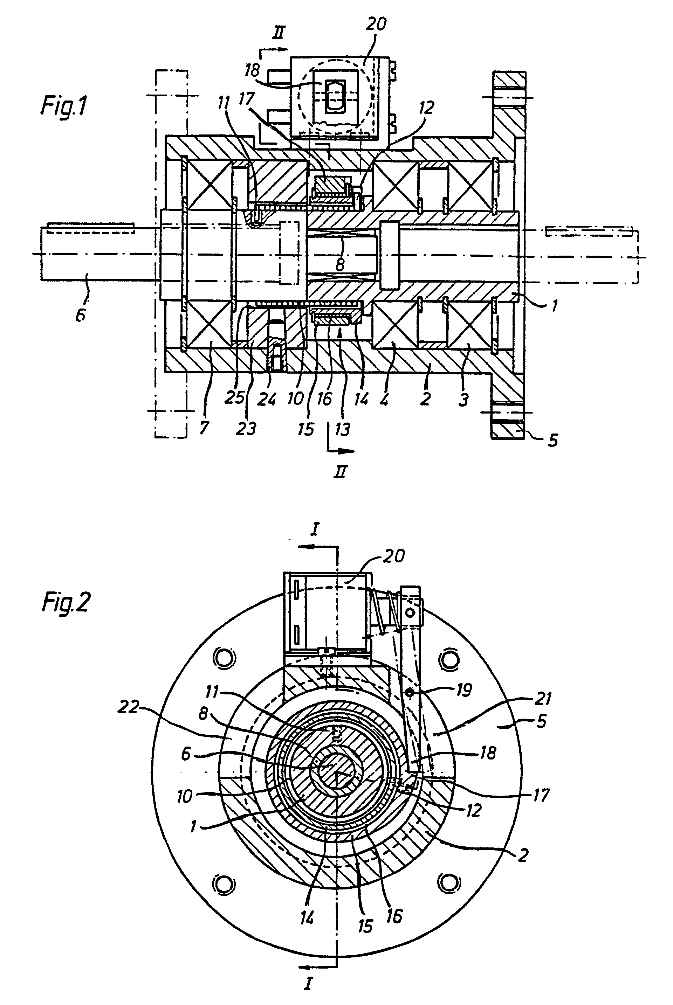

Die Abtriebsnabe 6 kann ebenso wie die Antriebsnabe 1 als Hohlwelle ausgebildet sein, was in strichpunktierten Linien dargestellt ist, und ist im in Fig. 1 dargestellten Ausführungsbeispiel als abgesetzte Welle ausgebildet. Die als stufig abgesetzte Welle ausgebildete Abtriebsnabe 6 ist mittels eines im Gehäuse 2 angeordneten Wälzlagers 7 und ferner am Ende mittels eines Nadellagers 8 gelagert, das in der holen Antriebsnabe 1 angeordnet ist, die ihrerseits wieder im Gehäuse 2 gelagert ist. Das Wälzlager 7 ist vorzugsweise ein Klemmkörper-Freilauf, der als Rücklaufsperre wirksam ist, was nachfolgend noch erläutert wird. Für eine Kupplung mit einem relativ grossen Durchmesser des Gehäuses ist unmittelbar neben einem normalen Wälzlager 7 ein Klemmkörper-Freilauf als Rücklaufsperre angeordnet, was nicht dargestellt ist.

Wenn die Kupplung ausserdem auch eine Vorlaufsperre aufweisen soll, die zu verhindern hat, dass die Abtriebsnabe die Antriebsnabe überholt, was durch das Lastmoment beispielsweise beim Antrieb eines Kurbeltriebs eintreten kann, dann besteht das Nadellager aus einem als Vorlaufssperre wirkenden Klemmkörper-Freilauf.

Die stirnseitig gegeneinander liegenden Endabschnitte der Antriebsnabe 1 und der Abtriebsnabe 6 sind von der Schlingfeder 10 umschlossen. Das eine Ende 11 der Schlingfeder 10 ist formschlüssig in der Abtriebsnabe 6 befestigt. Das andere Ende 12 der Schlingfeder 10 ist radial nach aussen abgebogen und formschlüssig in der Schalthülse 13 befestigt, die die Schlingfeder 10 umgibt. Der ungespannte Innendurchmesser der Schlingfeder 10 ist kleiner als der Durchmesser der Antriebsnabe 1 und der Abtriebsnabe 6, so dass die Schlingfeder unter Vorspannung auf der Antriebs- und der Abtriebsnabe aufliegt, wodurch die Schlingfeder im eingekuppelten Zustand die Antriebsnabe 1 und die Abtriebsnabe 6 reibschlüssig verbindet.

Die Schalthülse 13 besteht aus zwei konzentrisch ineinander angeordneten Ringen 14 und 15 und einer dazwischen angeordneten weiteren Schlingfeder 16, deren eines Ende am äusseren Ring 15 formschlüssig festgehalten ist. Die Schlingfeder 16 zwischen den beiden Ringen 14 und 15 erlaubt eine Verdrehung des äusseren Ringes 15 in der Antriebsdrehrichtung der Kupplung, während in der entgegengesetzten Drehrichtung der äussere Ring durch reibungsschlüssige Kupplung mit dem inneren Ring blockiert ist.

Der äussere Ring 15 besitzt am Aussenumfang einen radial vorstehenden Nocken 17. Dieser Nocken 17 läuft gegen einen in seine Umlaufbahn geschwenkten Auslösehebel 18, der um eine am Gehäuse 2 befestigte Schwenkachse 19 schwenkbar ist und dessen anderes Ende durch einen Hubmagneten 20 betätigt wird, der auf dem Gehäuse 2 oben fest angeordnet ist. Das Gehäuse 2 besitzt am zylindrischen Umfang eine Ausnehmung 21, durch die sich der Auslösehebel 18 von der Aussenseite nach innen hinein erstreckt, um mit dem Nocken 17 am äusseren Ring 15 der Schalthülse 13 in Eingriff zu gelangen. Die Antriebsdrehrichtung der Kupplung ist gemäss Fig. 2 im Gegenuhrzeigersinn gerichtet. Bei einer entgegengesetzten Antriebsrichtung würde der Hubmagnet 20 anders herum montiert und der Auslösehebel 18 auf der anderen Seite durch eine Ausnehmung 22 im Gehäuse 2 von der Aussenseite sich nach innen erstrecken. Aus diesem Grund weist das Gehäuse 2 die beiden Ausnehmungen 21 und 22 auf.

Der Vorteil der aus einem inneren Ring 14 und einem äusseren Ring 15 bestehenden Schalthülse 13 besteht darin, dass man den den Nocken 17 aufweisenden äusseren Ring 15 gemäss Fig. 2 im Gegenuhrzeigersinn, d. h. in der Antriebsdrehrichtung der Kupplung, beliebig verdrehen und in die jeweils gewünschte Position verstellen kann, in welcher die Schlingfeder-Kupplung ausgekuppelt werden soll, wenn beispielsweise das abtriebsseitig anschliessende Maschinenelement wie beispielsweise eine Kurvenscheibe in einer bestimmten Drehstellung angehalten werden soll.

In abgewandelter Ausführungsform kann die Schalthülse 13 natürlich auch nur aus einem Ring bestehen, der am Aussenumfang einen Nocken trägt, wobei dann auf die vorstehend beschriebenen Vorteile verzichtet werden muss.

Wenn der Nocken 17 der Schalthülse 13 auf den Auslösehebel 18 aufläuft, wird die Schlingfeder 10 geöffnet und die Antriebsnabe 1 von der Abtriebsnabe 6 getrennt. Damit die Rückstellkraft der Schlingfeder 10 die Abtriebsnabe 6 nicht entgegen der allgemeinen Drehrichtung zurückdreht, was wieder die Wirkung eines Einkuppelns hätte, muss das Wälzlager 7 als Rücklaufsperre ausgebildet sein, wie weiter oben bereits erwähnt worden ist.

Im Bereich der Abtriebsnabe 6 ist die Schlingfeder 10 von einer Bremsnabe 23 umschlossen, die im Gehäuse 2 mit Hilfe eines radialen Stiftes 24 festgehalten ist, über welchen das Bremsmoment auf das Gehäuse übertragen wird. Im dargestellten Ausführungsbeispiel wird die Schlingfeder 10 sowohl als Kupplungs als auch als Bremsfeder verwendet, wobei die Bremswirkung durch die Expansion der Schlingfeder 10 zustande kommt, sobald die Schalthülse 13 mit dem an dem äusseren Ring 15 angeordneten Nocken 17 gegen den Auslösehebel 18 anfährt. Zwischen der Schlingfeder 10 und der Bremsnabe 23 ist ein radiales Spiel 25 vorhanden, das so klein gewählt ist, dass beim Auskuppeln der Abtriebsnabe 6 die an dieser Abtriebsnabe wirksame Masse die Schlinge feder 10 soweit öffnet, dass sie mit der Bremsnabe 23 in Berührung kommt und eine Abbremsung der Abtriebsnabe 6 bewirkt. Die Bremsnabe 23 nimmt also das Lastmoment auf.

Eine Bremsnabe muss nicht bei jeder Ausführungsform der Schlingfeder-Kupplung vorhanden sein. Ebenso kann auch der Auslösehebel 18 auf andere Weise als durch einen Hubmagneten betätigt werden.

**Patentansprüche**

1. Schlingfeder-Kupplung mit einer Antriebsnabe (1) und einer Abtriebsnabe (6) und einer koaxial zur Antriebsnabe und zur Abtriebsnabe in zur Drehmomentübertragung geeigneten Weise angeordneten Schlingfeder (10) sowie mit einer Schalthülse (13), an welcher ein Federende (12) der Schlingfeder (10) festgehalten ist, deren anderes Federende an der Abtriebsnabe (6) festgehalten ist und welche Schalthülse einen Nocken (17) zum Zusammenwirken mit einem durch einen Stellantrieb (20) gesteuerten Auslösehebel (18) zwecks Ein- und Ausschalten der Kupplung aufweist, dadurch gekennzeichnet, dass die Antriebsnabe (1) und die Abtriebsnabe (6) in einem im wesentlichen zylindrischen Gehäuse (2) mit einem sich radial erstreckenden Endflansch (5) zum Anflanschen des Gehäuses gelagert sind und dass der Stellantrieb (20) zur Betätigung der Schalthülse (13) aussen am Gehäuse (2) angeordnet ist.

2. Kupplung nach Anspruch 1, dadurch gekennzeichnet, dass die Antriebsnabe (1) und die Abtriebsnabe (6) jeweils mittels im axialen Abstand voneinander angeordneter Wälzlager (3, 4, 7, 8) gelagert sind und dass eines der Wälzlager für die Lagerung der Abtriebsnabe (6) ein im Gehäuse angeordneter und als Rücklaufsperre wirkender Klemmkörper-Freilauf (7) ist.

3. Kupplung nach Anspruch 2, dadurch gekennzeichnet, dass das zweite Wälzlager für die Abtriebsnabe (6) ein zwischen Bohrung und Zapfen der ineinandergreifenden An- und Abtriebsnaben (1, 5) angeordneter, als Vorlaufsperre wirkender Klemmkörper-Freilauf (8) ist.

4. Kupplung nach Anspruch 2, dadurch gekennzeichnet, dass zwischen dem im Gehäuse (2) angeordneten Wälzlager (7) für die Abtriebsnabe (6) und der Schalthülse (13) eine einen Abschnitt der Kupplungs-Schlingfeder (10) umschliessende Bremsnabe (23) im Gehäuse (2) drehfest angeordnet ist.

5. Kupplung nach Anspruch 1, dadurch gekennzeichnet, dass die Schalthülse (13) zwei konzentrische Ringe (14, 15) und eine dazwischen angeordnete weitere Schlingfeder (16) aufweist, deren eines Ende in dem äusseren Ring (15) formschlüssig festgehalten ist, der am Aussenumfang mindestens einen radial vorstehenden Nocken (17) aufweist, und welche weitere Schlingfeder (16) eine Verdrehung des äusseren Ringes (15) in der Antriebsdrehrichtung der Kupplung zwecks Veränderung der Nockenstellung zulässt und beim Anfahren des Nockens (17) gegen den Auslösehebel (18) den äusseren Ring (15) mit dem inneren Ring (14) reibungsschlüssig kuppelt zwecks Betätigung der Schlingfeder-Kupplung.

## Claims

1. Overrunning spring clutch with a driving hub (1) and a driven hub (6) and a wrap spring (10) arranged coaxially with the driving hub and the driven hub in a manner suitable for torque transmission as well as a control sleeve (13) at which one spring end (12) of the wrap spring (10) is held in place, the other spring end of which being retained at the driven hub (6), the control sleeve having a cam (17) for co-operation with an operating lever (18) controlled by an actuator (20) for the purpose of engaging and disengaging the clutch, characterised in that the driving hub (1) and the driven hub (6) are journalled in an essentially cylindrical housing (2) with a radially extending end flange (5) for flange-mounting the housing, and that the actuator (20) is arranged on the outside of the housing (2) for actuating the control sleeve (13).

2. A clutch according to claim 1, characterised in that the driving hub (1) and the driven hub (6) are respectively journalled by means of axially spaced apart roller bearings (3, 4, 7, 8) and that one of the roller bearings is a jamming roller-freewheel (7) arranged in the housing and functioning as a backstop.

3. A clutch according to claim 2, characterised in that the second roller bearing for the driven hub (6) is a jamming roller-freewheel (8) arranged between the bore and the journal of the intermeshed driving and driven hubs (1, 5) and functioning as a forward run stop.

4. A clutch according to claim 2, characterised in that between the roller bearing (7) disposed in the housing (2) for the driven hub (6) and the control sleeve (13) a braking hub (23) is arranged rotationally fast in the housing (2) so as to surround a section of the wrap spring (10).

5. A clutch according to claim 1, characterised in that the control sleeve (13) has two concentric rings (14, 15) and a further wrap spring (16) disposed therebetween, one end of which latter being keyed into the outer ring (15) and the outer periphery of which has a radially projecting cam (17), and which further wrap spring (16) permits an angular displacement of the outer ring (15) in the direction of driving rotation of the clutch in order to alter the position of the cam, and on abutment of the cam (17) against the operating lever (18) frictionally couples the outer ring (15) with the inner ring (14) in order to actuate the overrunning spring clutch.

## Revendications

1. Embrayage à ressort enroulé avec un moyeu moteur (1) et un moyeu mené (6) et un ressort enroulé (10) coaxial au moyeu moteur et au moyeu entraîné et disposé de façon appropriée à la transmission du couple de rotation ainsi qu'avec une gaine d'enclenchement (13), à laquelle est fixée une extrémité (12) du ressort enroulé (10) dont l'autre extrémité est fixée au moyeu mené (6), et laquelle gaine d'enclenchement présente un ergot (17) destiné à coopérer avec un levier de déclenchement (18) commandé par un organe de positionnement (20) afin de connecter et de déconnecter l'embrayage, caractérisé en ce que le moyeu moteur (1) et le moyeu mené (6) sont logés dans une enceinte (2) sensiblement cylindrique avec une bride d'extrémité (5) qui s'étend radialement pour brider l'enceinte et en ce que l'organe de positionnement (20) pour actionner la gaine d'enclenchement (13) est disposé à l'extérieur sur l'enceinte (2).

2. Embrayage selon la revendication 1, caractérisé en ce que le moyeu moteur (1) et le moyeu mené (6) sont logés chacun au moyen de paliers à roulements (3, 4, 7, 8) disposés à distance axiale l'un de l'autre et en ce que l'un des paliers à roulements pour le logement du moyeu mené (6) est un dispositif à roue libre et à corps de serrage (7) disposé dans l'enceinte et agissant en tant que dispositif anti-retour.

3. Embrayage selon la revendication 2, caractérisé en ce que le deuxième palier à roulement pour le moyeu mené (6) est un dispositif à roue libre et à corps de serrage (8) agissant en tant que dispositif anti-avance et disposé entre l'alésage et l'axe des moyeux moteur et mené (1,5) qui viennent en contact l'un dans l'autre.

4. Embrayage selon la revendication 2, caractérisé en ce qu'entre le palier à roulement (7) disposé dans l'enceinte (2) pour le moyeu mené (6) et la gaine d'enclenchement (13) un moyeu de freinage (23) entourant une section du ressort enroulé (10) de l'embrayage est disposé dans l'enceinte (2) de façon solidaire en rotation.

5. Embrayage selon la revendication 1, caractérisé en ce que la gaine d'enclenchement (13) présente deux bagues concentriques (14, 15) et un autre ressort enroulé (16) disposé entre celles-ci, dont l'une extrémité est maintenue par assemblage de forme dans la bague externe (15) qui présente à sa périphérie externe au moins un ergot (17) faisant saillie radialement, l'autre ressort enroulé (16) permettant une rotation de la bague externe (15) dans le sens de rotation d'entraînement de l'embrayage, afin de modifier la position de l'ergot et accouplant par assemblage par friction la bague externe (15) avec la bague interne (14) lors de la venue en contact de l'ergot (17) contre le levier de déclenchement (18) afin d'actionner l'embrayage à ressort enroulé.

Fig.1

Fig.2